# NEUE EUROPÄISCHE PATENTSCHRIFT

(11) **EP 0 597 305 B2**
(45) Veröffentlichungstag und Bekanntmachung des Hinweises auf die Entscheidung über den Einspruch: **17.11.1999**
(45) Hinweis auf die Patenterteilung: 29.05.1996
(21) Anmeldenummer: 93117247.2
(22) Anmeldetag: 25.10.1993
(51) Int. Cl.: F02C 7/143, F02C 6/18, F01K 23/10

(54) **Verfahren zum Betrieb einer Kombianlage**
Method of operating a combined cycle installation
Procédé de functionnement d'une centrale à cycle combiné

(30) Priorität: 07.11.1992 DE 4237665
(43) Veröffentlichungstag der Anmeldung: 18.05.1994
(73) Patentinhaber: ASEA BROWN BOVERI AG, 5400 Baden (CH)
(72) Erfinder: Frutschi, Hans Ulrich, CH-5223 Riniken (CH)
(74) Vertreter: Pöpper, Evamaria, Dr.

(56) Entgegenhaltungen:
- EP-A- 0 062 932
- EP-A- 0 079 648
- EP-A- 0 516 995
- WO-A-83/01812
- FR-A- 2 313 581
- US-A- 4 896 499
- H.Clemensen, M.Mayer, "Hilleroed Combined-Cycle Power Station", IGTI - Vol. 5, 1990, ASME Cogen-Turbor, Book No. 100302-1990, S. 133-139
- Stefan,Mayinger, "Thermodynamik, Grundlagen und technische Anwendungen", Band 2, 12. erweiterte Auflage, Springer-Verlag (1988), S. 226-233

## Beschreibung

### Technisches Gebiet

Die Erfindung betrifft ein Verfahren zum Betrieb einer aus einer Gasturbogruppe und einer Dampfturbinenanlage gebildeten Kombianlage sowie eine Vorrichtung zur Durchführung des Verfahrens.

### Stand der Technik

Es ist allgemein bekannt, daß die beim Gasturbinenprozess benötigte Verbrennungsluft von Verdichtern bereitgestellt wird. Dabei wird häufig ein Teil der Verdichterluft abgezweigt, um zur Kühlung der Beschaufelung der Gasturbine beizutragen.

Letzteres ist aber nur möglich, wenn die Verdichterluft ausreichend niedrig temperiert ist, da anderenfalls die Kühlung infrage gestellt ist. Darüberhinaus führen hohe Temperaturen der Verbrennungsluft zu Schwierigkeiten bei der Einhaltung niedriger Stickoxidwerte (NOₓ) im Abgas der Gasturbine.

Insbesondere bei modernen Hochleistungsgasturbinen sind hohe Druckverhältnisse der Verbrennungsluft erforderlich, d.h., es muß besonders stark verdichtete Verbrennungsluft zugeführt werden, was sich im zuvor beschriebenen Sinne nachteilig auswirkt.

Zwar ist es bereits bekannt, zur Abhilfe der vorgenannten Probleme das Temperaturniveau der verdichteten Verbrennungsluft durch Kühlung in einem oder gegebenenfalls in mehreren Kühlern abzusenken, jedoch ist der hierbei erfolgende Wärmeentzug aus der Verbrennungsluft bei Kombianlagen bezüglich Wirkungsgrad ungünstig und daher kaum zu vertreten, wenn nicht gleichzeitig die entzogene Wärmeenergie genutzt wird.

Ausgehend von diesem Stand der Technik ist es daher Aufgabe der Erfindung, ein Verfahren der eingangs genannten Art so zu verbessern, daß eine ausreichende Kühlung der Verbrennungsluft erreicht wird und gleichzeitig die bei der Abkühlung der Verbrennungsluft erhaltene Wärmeenergie im Prozess selbst weiter verwertet wird. Außerdem soll eine Vorrichtung zur Durchführung des Verfahrens angegeben werden.

Aus IGTI-Vol. 5, 1990 ASME Cogen-Turbor, Book No. 100302-1990, S. 133-139 ist eine Kombianlage bekanntgeworden, wobei eine zur Kombianlage zugehörige Gasturbogruppe einen Verdichter mit zugeordnetem von Wasser als Kühlmedium beaufschlagtem Kühler aufweist. Die Abgase einer zur Gasturbogruppe zugehörigen Turbine durchströmen einen Abhitzekessel mit einer nachgeschalteten Dampfturbine sowie einen Mischvorwärmer. Dieser wird von einem der Dampfturbine nachgeschalteten Kondensator mit Kondensat gespeist. Das unverdampfte Restwasser nach Mischung mit dem Kondensat im Mischvorwärmer wird dabei dem Abhitzekessel zugeleitet, womit dem Kühler kein qualitativ hochstehendes Kühlmedium zur Verfügung gestellt wird, so dass die Kühlung der Verdichterluft nicht im optimalen Sinn maximiert werden kann, was sich auf den Wirkungsgrad und auf die spezifische Leistung der Anlage negativ auswirkt.

### Darstellung der Erfindung

Diese Aufgabe wird durch die Merkmale der Patentansprüche 1 und 6 gelöst. Danach ist vorgesehen, daß das von der Abwärme der verdichteten Verbrennungsluft erhitzte Kühlwasser in wenigstens einer Stufe entspannt wird. Der dabei entstehende Dampf wird der Dampfturbine zugeleitet, während das unverdampfte Restwasser dem zur Dampfturbinenanlage zugehörigen Mischvorwärmer zugeleitet wird und nach Vermischung mit dem aus dem der Dampfturbine nachgeschalteten Kondensator zugeführten Kondensat zur Einspeisung des Kühlers verwendet wird.

In zweckmäßiger Weiterbildung der Erfindung ist vorgesehen, daß das in einer ersten Stufe entspannte Wasser teilweise ausdampft und daß der hierbei gebildete Dampf überhitzt wird, bevor er der Dampfturbine zugeleitet wird.

Entsprechend einer bevorzugten Ausgestaltung der Erfindung wird das unverdampfte Restwasser im Mischvorwärmer entspannt und der hierbei gebildete Dampf ebenfalls der Dampfturbine zugeleitet.

Eine bevorzugte Ausführungsform der Erfindung sieht vor, daß das erhitzte Kühlwasser in wenigstens einem sogenannten Flash-Verdampfer spontan entspannt wird, daß der hierbei gebildete Dampf dem Abhitzekessel zugeleitet wird und daß das unverdampfte Restwasser dem Mischvorwärmer zugeführt wird.

Eine konkretisierte Lösung der zugrundeliegenden Aufgabe in Form einer Vorrichtung zur Durchführung des erfindungsgemäßen Verfahrens ist erfindungsgemäß durch die kennzeichnenden Merkmale des Patentanspruchs 6 gekennzeichnet.

Dabei ist vorgesehen, daß der wasserseitige Ausgang des Kühlers mit wenigstens einem Ausdampfgefäß verbunden ist, welches seinerseits mittelbar oder unmittelbar mit der Dampfturbine und mit dem Mischvorwärmer verbunden ist.

So gesehen wird unverdampftes Wasser aus dem Ausdampfgefäss in den Mischvorwärmer eingeleitet. Durch eine zwischen Mischvorwärmer und wasserseitigem Eingang des kühlers gelegte Verbindungsleitung fliesst dann ein kühlwasser.

Vorteilhafterweise kann dabei ein Ausdampfgefäß die zum Abhitzekessel gehörige Trommel sein.

Entsprechend einer bevorzugten Ausführungsform der erfindungsgemäßen Vorrichtung ist als Ausdampfgefäß ein sogenannter Flash-Verdampfer vorgesehen, welcher eine spontane Ausdampfung des erhitzten und unter höherem Druck, als er im Flash-Verdampfer vorherrscht, stehenden Kühlwassers erlaubt.

In weiterer Verbesserung dieser Ausgestaltung können mehrere Ausdampfgefäße in Reihe geschaltet sein. Dabei ist jedes nachfolgende Ausdampfgefäß hinsichtlich Druck und Temperatur auf das jeweils vorherige Ausdampfgefäß angepaßt. Auf diese Weise ist es möglich, eine optimale Ausnutzung der Restwärme des durch die Abwärme des Verdichters erhitzten Kühlwassers zu erreichen.

Diese und weitere vorteilhafte Ausgestaltungen der Erfindung sind Gegenstand der Unteransprüche.

### Kurze Beschreibung der Zeichnung

Anhand von in der Zeichnung dargesteltten Ausführungsbeispielen der Erfindung sollen die Erfindung, vorteilhafte Ausgestaltungen und Verbesserungen der Erfindung sowie besondere orteile der Erfindung näher erläutert und beschrieben werden.

Es zeigen:
- Figur 1:: ein Schaltschema einer ersten erfindungsgemäßen Kombianlage mit Überhitzung des verdampften Kühlwassers
- Figur 2:: ein Schaltschema einer zweiten erfindungsgemäßen Kombianlage mit Verdampfung auf optimalem Druckniveau in einem Flash-Verdampfer
- Figur 3:: ein Schaltschema einer dritten erfindungsgemäßen Kombianlage mit einem als Zweidrucksystem ausgebildeten Abhitzekessel

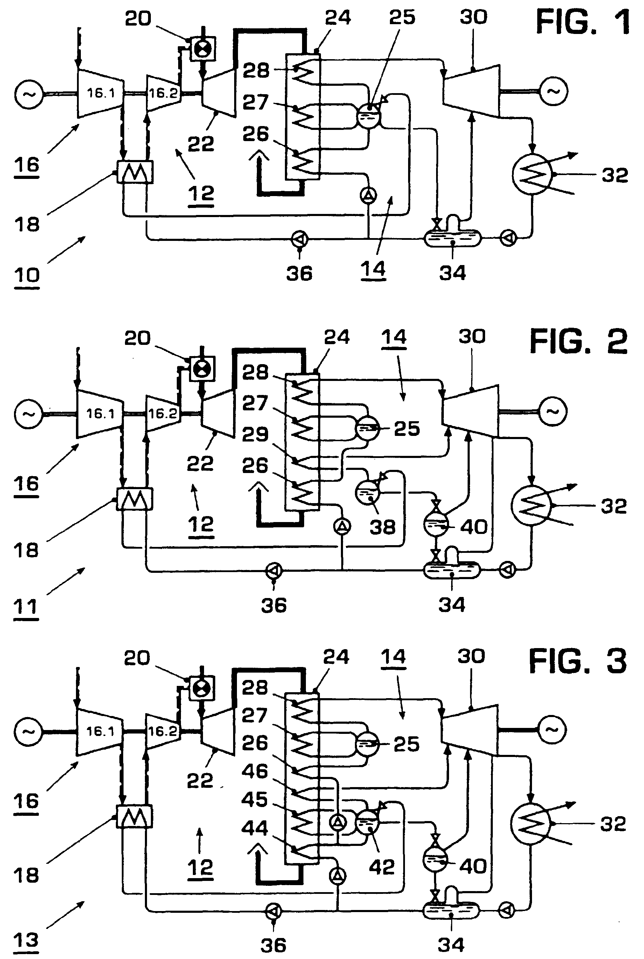

In Fig. 1 ist das Schaltschema einer Kombianlage 10 mit einer Gasturbogruppe 12 und einer Dampfturbinenanlage 14 dargestellt.

Die Gasturbogruppe 12 weist einen zweistufigen Verdichter 16 mit einem zwischen den beiden Verdichterstufen 16.1 und 16.2 angeordneten Kühler 18, eine Brennkammer 20 und eine Gasturbine 22 auf.

Die Dampfturbinenanlage 14 umfaßt einen Abhitzekessel 24, der vom Abgas der Gasturbine 22 beheizt wird und in welchem eine Trommel 25, ein Economizer 26, ein Verdampfer 27 und ein Überhitzer 28 integriert sind, eine nachgeschaltete Dampfturbine 30, einen hieran nachgeschalteten Kondensator 32 und einen mit dem Kondensator 32 verbundenen Mischvorwärmer 34.

Der hier insbesondere interessierende Kühler 18 ist als Luft-/Wasser-Kühler ausgebildet und auf seiner Eingangsseite mit dem Mischvorwärmer unter Zwischenschaltung einer Druckerhöhungspumpe 36 zwecks Bereitstellung von vorgewärmtem Druckwasser als Kühlwasser verbunden.

Der Ausgang des Kühlers 18 ist mit der Trommel 25 verbunden, die ihrerseits sowohl mit dem Economizer 26 und dem Verdampfer 27 als auch mit dem Überhitzer 28 in Verbindung steht.

Entsprechend der schaltungsmäßigen Betriebsweise der dargestellten Anordnung 10 wird das Kühlwasser infolge der Verdichtungsarbeit im Verdichter 16 auf ein Temperaturniveau aufgeheizt, welches höher liegt als die Temperatur der Trommel 25, in welcher der aus dem Verdampfer 27 kommende Dampf gesammelt wird. Demgemäß kommt es zu einer teilweisen Ausdampfung des der Trommel 25 zugeführten erhitzten Kühlwassers. Der dabei gebildete Dampf strömt dem Überhitzer 28 zu und gelangt anschließend zur Dampfturbine, die er als Antriebsmedium beaufschlagt.

Das nicht verdampfte Restwasser wird von der Trommel 25 dem Mischvorwärmer 34 zugeleitet, wo eine weitere Teilverdampfung stattfindet, da auch der mit Kondensat gespeiste Mischvorwärmer 34 sich auf einem niedrigeren Temperaturniveau als das zuströmende Restwasser befindet.Der bei dieser Ausdampfung gebildete Dampf wird unmittelbar der Dampfturbine 30 zugeführt und trägt auf diese Weise zu einer Nutzung der Restwärmeenergie bei.

Die in Fig.2 per Schaltschema gezeigte Anordnung betrifft ebenfalls eine Kombianlage 11, wobei das dargestellte Schaltschema dem in Fig.1 gezeigten Schaltschema in zahlreichen Merkmalen entspricht, so daß für die übereinstimmenden Merkmale jeweils die entsprechenden Bezugsziffern verwendet wurden, für die dann auch die zu Fig.1 gegebenen Erläuterungen gelten.

Gegenüber der in Fig.1 gezeigten Anordnung weist dei Schaltung gemäß Fig.2 jedoch einige in thermodynamischer Hinsicht relevante Verbesserungen auf.

So ist zunächst zu beachten, daß aufgrund des relativ hohen Druckniveaus in der Trommel 25 nur ein verhältnismäßig kleiner Teil des zugeführten heißen Kühlwassers zur Verdampfung kommt. Diesem Aspekt wird dadurch begegnet, daß ein separates erstes Ausdampfgefäß 38 vorgesehen ist, welches vorzugsweise ein sogenannter Flash-Verdampfer ist. Der beim Entspannen des heißen Restwassers in diesem ersten Ausdampfgefäß 38 entstehende Dampf wird zunächst einem Überhitzer 29 zugeführt und anschließend der Dampfturbine 30.

Dieses erste Ausdampfgefäß 38 ist unabhängig von den durch die Abgasbeheizung des Abhitzekessels 24 bestimmten Verfahrensparametern, sondern kann individuell auf das erforderliche Druck- und Temperaturniveau des Kühlers 18 bzw. auf die verfahrenstechnischen Daten des erhitzten Kühlwassers angepaßt werden. Hierdurch ist eine optimale Ausnutzung der im Kühlwasser enthaltenen Abwärme möglich.

In Weiterverfolgung dieser Überlegungen ist ein zweites Ausdampfgefäß 40 dem ersten in Reihe nachgeschaltet, das ebenfalls hinsichtlich Druck und Temperatur auf das vom ersten Ausdampfgefäß 38 zuströmende Restwasser ausgelegt ist. Vorteilhafterweise ist das zweite Ausdampfgefäß 40 wie auch bereits das erste Ausdampfgefäß 38 als Flash-Verdampfer ausgebildet.

Der beim Ausdampfen des aus dem ersten Ausdampfgefäß 38 zugeleiteten Restwassers in diesem zweiten Ausdampfgefäß 40 enstehende Dampf wird zur weiteren Nutzung ebenfalls der Dampfturbine 30 zugeführt, während das unverdampfte Restwasser zur restlichen Entspannung dem Mischvorwärmer 34 zugeleitet wird, dessen Dampfdom ebenfalls mit der Dampfturbine 30 verbunden ist.

Die in Fig.3 dargestellte Schaltungsanordnung betrifft ebenfalls eine Kombianlage 13, die weitgehend mit den in Fig.1 beziehungsweise in Fig.2 gezeigten und erläuterten Anordnungen übereinstimmt, so daß für die übereinstimmenden Merkmale jeweils die entsprechenden Bezugsziffern verwendet wurden, für die dann auch die zu Fig.1 beziehungsweise zu Fig.2 gegebenen Erläuterungen gelten.

Der wesentliche Unterschied gegenüber den zuvor erläuterten Anordnungen 10 und 11 ist darin zu sehen, daß hier der Abhitzekessel 24 als Zweidrucksystem ausgeführt ist, wobei an Stelle eines Flash-Verdampfers als erstes Ausdampfgefäß 42 für das heiße Kühlwasser eine Kesseltrommel 42 vorgesehen ist. Durch diese Maßnahme gelingt es neben einer wirkungsvollen Ausnutzung der Abwärme aus dem Verdichter 16 noch besser die Abwärme der Rauchgase der Gasturbine 22im Abhitzekessel 24 auszunutzen.

Demgemäß weist der Abhitzekessel 24 zusätzlich zu den in Fig 1 bereits gezeigten als zweite Druckstufe vorgesehenen Baugruppen wie Economizer 26, Verdampfer 27 und Überhitzer 28 eine auf das Druckniveau des Kühlers 18 abgestimmte erste Druckstufe mit ebenfalls einem Economizer 44, einem Verdampfer 45 und einem Überhitzer 46 auf.

Das in der als Ausdampfgefäß fungierenden Trommel 42 unverdampfte Restwasser wird zu einem zweiten Ausdampfgefäß 40 mit geringerer Temperatur und geringerem Druck geleitet, so dan eine erneute Ausdampfung stattfindet, wobei der resultierende Dampf der Dampfturbine 30 und das verbleibende Restwasser zur weiteren Entspannung dem Mischvorwärmer 34 zugeleitet wird.

Eine mit 3 Trommeln abgestuften Druckes bestückte Dreidruckkesselanordnung, wie sie für höchstwertige Kombianlagen zur Anwendung kommt, gestattet eine fein abgestufte Ausdampfung des Kühlwassers mit geringstem zusätzlichem Bauaufwand.

## Patentansprüche

1. Verfahren zum Betrieb einer Kombianlage (10, 11, 13) mit einer einen Verdichter (16) mit zugeordnetem von Wasser als Kühlmedium beaufschlagtem Kühler (18), eine Brennkammer 20) und eine Gasturbine (22) aufweisenden Gasturbogruppe (12) und mit einer einen vom Abgas der Gasturbine (22) beheizten Abhitzekessel (24) mit Verdampfer (27, 45), Trommel (25, 42), Economizer (26, 44) und Überhitzer (28, 46), eine nachgeschaltete Dampfturbine (30) sowie einen Mischvorwärmer (34), der von einem der Dampfturbine (30) nachgeschalteten Kondensator 32) mit Kondensat gespeist wird, aufweisenden Dampfturbinenanlage 14), wobei das Verfahren Folgende Schritte umfaßt: das von der Abwärme der verdichteten Verbrennungsluft des Verdichters (16) erhitzte Kühlwasser wird in wenigstens einer Stufe entspannt, der hierbei gebildete Dampf wird dem Abhitzekessel (24) und/oder der Dampfturbine (30) zugeleitet, das unverdampfte Restwasser wird dem Mischvorwärmer (34) zugeleitet und nach Vermischung mit dem zugeführten Kondensat zur Einspeisung des Kühlers 18) verwendet.

2. Verfahren nach Anspruch 1, dadurch gekennzeichnet, daß das in einer ersten Stufe entspannte Wasser teilweise ausdampft und daß der hierbei gebildete Dampf überhitzt wird, bevor er der Dampfturbine (30) zugeleitet wird.

3. Verfahren nach Anspruch 1, dadurch gekennzeichnet, daß das unverdampfte Restwasser im Mischvorwärmer (34) entspannt wird und der hierbei gebildete Dampf ebenfalls der Dampfturbine (30) zugeleitet wird.

4. Verfahren nach Anspruch 1, dadurch gekennzeichnet, daß das erhitzte Kühlwasser in wenigstens einem sogenannten Flash-Verdampfer (38, 40) spontan entspannt wird, daß der hierbei gebildete Dampf dem Abhitzekessel (24) zugeleitet wird und daß das unverdampfte Restwasser dem Mischvorwärmer (34) zugeführt wird.

5. Verfahren nach Anspruch 4, dadurch gekennzeichnet, daß das im ersten Flash-Verdampfer (38) anfallende Restwasser zunächst in einem zweiten Flashverdampfer (40) weiter entspannt wird, daß der hierbei gebildete Dampf einer Zwischenstufe der Dampfturbine (30) zugeführt wird und daß das im zweiten Flash-Verdampfer (40) anfallende Restwasser dem Mischvorwärmer (34 zugeleitet wird.

6. Vorrichtung zur Durchführung des Verfahrens nach einem der Ansprüche 1 bis 5 mit einer Kombianlage (10, 11, 13), die eine einen Verdichter (16) mit zugeordnetem von Wasser als Kühlmedium beaufschlagtem Kühler (18), eine Brennkammer (20) und eine Gasturbine 22) aufweisenden Gasturbogruppe (12) sowie eine einen vom Abgas der Gasturbine (22) beheizten Abhitzekessel 24) mit Verdampfer (27, 45) Trommel (25, 42), Economizer (26, 44) und Überhitzer (28, 46), eine nachgeschaltete Dampfturbine (30) sowie einen Mischvorwärmer (34), der von einem der Dampfturbine (30) nachgeschalteten Kondensator (32) mit Kondensat gespeist wird, aufweisenden Dampfturbinenanlage (14) umfaßt, wobei der wasserseitige Ausgang des Kühlers (18) mit wenigstens einem Ausdampfgefäß (25, 38, 40, 42) verbunden ist, das seinerseits mittelbar oder unmittelbar mit der Dampfturbine (30) und mit dem Mischvorwärmer (34) verbunden ist, wobei unverdampftes Restwasser aus dem Ausdampfgefäss in den Mischvorwärmer einleitbar ist, und wobei eine Verbindungsleitung für ein Kühlwasser zwischen dem Mischvorwärmer und dem wasserseitigen Eingang des Kühlers gelegt ist.

7. Vorrichtung nach Anspruch 6, dadurch gekennzeichnet, daß ein Ausdampfgefäß (25, 42) die zum Abhitzekessel (24) gehörige Trommel (25, 42) ist.

8. Vorrichtung nach Anspruch 6, dadurch gekennzeichnet, daß als Ausdampfgefäß (38, 40) ein sogenannter Flash-Verdampfer vorgesehen ist.

9. Vorrichtung nach einem der Ansprüche 6 bis 8. dadurch gekennzeichnet, daß mehrere Ausdampfgefäße (38, 40, 42) in Reihe geschaltet sind und daß jedes nachfolgende Ausdampfgefäß hinsichtlich Druck und Temperatur auf das jeweils vorherige Ausdampfgefäß angepaßt ist.

## Claims

1. Method of operating a combined cycle installation (10, 11, 13) comprising a gas-turbine group (12), having a compressor (16) with allocated cooler (18) acted upon by water as cooling medium, a combustion chamber (20) and a gas turbine (22), and a steam-turbine plant (14) having a waste-heat boiler (24), heated by the exhaust gas from the gas turbine (22) and containing an evaporator (27, 45), drum (25. 42), economizer (26, 44) and superheater (28, 46), a steam turbine (30) arranged downstream and also a mixing preheater (34) which is fed with condensate from a condenser (32) arranged downstream of the steam turbine (30), the method comprising the following steps: the cooling water heated by the waste heat of the compressed combustion air from the compressor (16) is expanded in at least one stage, the steam formed in the process is directed to the waste-heat boiler (24) and/or the steam turbine (30), the residual water which has not evaporated is fed to the mixing preheater (34) and after mixing with the fed condensate is used for feeding the cooler (18).

2. Method according to Claim 1, characterized in that the water expanded in a first stage partially evaporates and in that the steam formed in the process is superheated before it is directed to the steam turbine (30).

3. Method according to Claim 1, characterized in that the residual water which has not evaporated is expanded in the mixing preheater (34) and the steam formed in the process is likewise directed to the steam turbine (30).

4. Method according to Claim 1, characterized in that the heated cooling water is expanded spontaneously in at least one so-called flash evaporator (38, 40), in that the steam formed in the process is directed to the waste-heat boiler (24), and in that the residual water which has not evaporated is fed to the mixing preheater (34).

5. Method according to Claim 4, characterized in that the residual water collecting in the first flash evaporator (38) is first of all further expanded in a second flash evaporator (40), in that the steam formed in the process is fed to an intermediate stage of the steam turbine (30), and in that the residual water collecting in the second flash evaporator (40) is directed to the mixing preheater (34).

6. Apparatus for carrying out the method according to one of Claims 1 to 5, having a combined cycle installation (10, 11, 13) which comprises a gas-turbine group (12), having a compressor (16) with allocated cooler (18) acted upon by water as cooling medium, a combustion chamber (20) and a gas turbine (22), and also a steam-turbine plant (14) having a waste-heat boiler (24), heated by the exhaust gas from the gas turbine (22) and containing an evaporator (27, 45), drum (25, 42), economizer (26, 44) and superheater (28, 46), a steam turbine (30) arranged downstream and also a mixing preheater (34) which is fed with condensate from a condenser (32) arranged downstream of the steam turbine (30), the water-side outlet of the cooler (18) being connected to at least one evaporation vessel (25, 38, 40, 42) which is in turn connected indirectly or directly to the steam turbine (30) and to the mixing preheater (34), it being possible to introduce residual water which has not evaporated from the evaporation vessel into the mixing preheater, and there being a connection line for a cooling water between the mixing preheater and the water-side inlet of the cooler.

7. Apparatus according to Claim 6, characterized in that one evaporation vessel (25, 42) is the drum (25, 42) belonging to the waste-heat boiler (24).

8. Apparatus according to Claim 6, characterized in that a so-called flash evaporator is provided as evaporation vessel (38, 40).

9. Apparatus according to one of Claims 6 to 8, characterized in that a plurality of evaporation vessels (38, 40, 42) are connected in series and in that each following evaporation vessel is adapted in respect of pressure and temperature to the respectively preceding evaporation vessel.

## Revendications

1. Procédé de fonctionnement d'une centrale à cycle combiné (10, 11, 13) avec un groupe turbine à gaz (12) comprenant un compresseur (16) auquel est affecté un refroidisseur (18) actionné par de l'eau utilisée comme fluide de refroidissement, une chambre de combustion (20) et une turbine à gaz (22) et avec une turbine à vapeur (14) comprenant une chaudière de récupération (24) chauffée par les gaz d'échappement de la turbine à gaz (22) avec des évaporateurs (27, 45), des tambours (25, 42), des économiseurs (26, 44) et des surchauffeurs (28. 46), une turbine à vapeur (30) montée en aval ainsi qu'un réchauffeur à mélange (34) qui est alimenté par le condensat provenant d'un condensateur (32) monté en aval de la turbine à vapeur (30), le procédé comprenant les étapes suivantes : l'eau de refroidissement chauffée par la chaleur perdue de l'air de combustion comprimé du compresseur (16) est détendue dans au moins un étage, la vapeur ainsi formée est amenée à la chaudière de récupération (24) et/ou à la turbine à vapeur (30), l'eau résiduelle non évaporée est amenée au réchauffeur à mélange (34) puis utilisée pour l'alimentation du refroidisseur (18) après avoir été mélangée avec le condensat amené.

2. Procédé conforme à la revendication 1, caractérisé par le fait que l'eau détendue dans un premier étage est partiellement évaporée et que la vapeur ainsi formée est surchauffée avant d'être amenée à la turbine à vapeur (30).

3. Procédé conforme à la revendication 1, caractérisé par le fait que l'eau résiduelle non évaporée est détendue dans le réchauffeur à mélange (34) et que la vapeur ainsi formée est également amenée à la turbine à vapeur (30).

4. Procédé conforme à la revendication 1, caractérisé par le fait que l'eau de refroidissement chauffée est détendue de façon spontanée dans au moins un évaporateur dit "flash" (38, 40), que la vapeur ainsi formée est amenée à la chaudière de récupération (24) et que l'eau résiduelle non évaporée est amenée au réchauffeur à mélange (34).

5. Procédé conforme à la revendication 4, caractérisé par le fait que l'eau résiduelle se trouvant dans le premier évaporateur flash (38) est tout d'abord détendue une nouvelle fois dans un deuxième évaporateur flash (40), que la vapeur ainsi formée est amenée à un étage intermédiaire de la turbine à vapeur (30) et que l'eau résiduelle se trouvant dans le deuxième évaporateur flash (40) est amenée au réchauffeur à mélange (34).

6. Dispositif destiné à réaliser le procédé conforme à l'une des revendications 1 à 5 avec une centrale à cycle combiné (10, 11, 13) avec un groupe turbine à gaz (12) comprenant un compresseur (16) auquel est affecté un refroidisseur (18) actionné par de l'eau utilisée comme fluide de refroidissement, une chambre de combustion (20) et une turbine à gaz (22) ainsi qu'une turbine à vapeur (14) comprenant une chaudière de récupération (24) chauffée par les gaz d'échappement de la turbine à gaz (22) avec des évaporateurs (27, 45), des tambours (25, 42), des économiseurs (26, 44) et des surchauffeurs (28, 46), une turbine à vapeur (30) branchée en aval ainsi qu'un réchauffeur à mélange (34) qui est alimenté par le condensat provenant d'un condensateur (32) branché en aval de la turbine à vapeur (30), la sortie eau du refroidisseur (18) étant reliée avec au moins une cuve d'évaporation (25, 38, 40, 42), laquelle de son côté est reliée directement ou indirectement à la turbine à vapeur (30) et au réchauffeur à mélange (34), l'eau résiduelle non évaporée en provenance de la cuve d'évaporation pouvant être amenée dans le réchauffeur à mélange et une conduite de liaison pour l'eau de refroidissement étant posée entre le réchauffeur à mélange et l'entrée côté eau du refroidisseur.

7. Dispositif conforme à la revendication 6, caractérisé par le fait qu'une cuve d'évaporation (25, 42) est le tambour (25, 42) faisant partie de la chaudière de récupération (24).

8. Dispositif conforme à la revendication 6, caractérisé par le fait que la cuve d'évaporation (38, 40) prévue est ce que l'on appelle un évaporateur flash.

9. Dispositif conforme à l'une des revendications 6 à 8, caractérisé par le fait que plusieurs cuves d'évaporation (38, 40, 42) sont montées en série et que chaque cuve d'évaporation est adaptée, pour ce qui est de sa pression et de sa température, à la cuve d'évaporation précédente.
